# EUROPEAN PATENT APPLICATION

(11) **EP 1 359 739 A2**
(43) Date of publication of application: **05.11.2003**
(21) Application number: 03100349.4
(22) Date of filing: 14.02.2003
(51) Int. Cl.: H04N 1/00

(54) **A Method and System for Transmitting Digital Media between Remote Locations**

(30) Priority: 27.02.2002 US 683885
(71) Applicant: Ford Motor Company, Dearborn, MI 48124 (US); MediaMagic Corporation, Belford, New Jersey 07718 (US)
(72) Inventor: Rowse, William T., Belford NJ 07718 (US); Inman, Barry M., Taylor MI 48180 (US); Mayberry, Debra L., Ypsilanti MI 48198 (US); Park, David, Gary, Livonia MI 48154 (US); Ubik, Henry, Thomas, Grosse Point Park MI 48230 (US); Mashni, Paul, W., Plymouth MI 48170 (US); Jackson, Robert, P., Westland MI 48186 (US)
(74) Representative: Messulam, Alec Moses

(57) **Abstract**

A method and system for processing and transmitting digital information between two locations is disclosed as applied to a warranty claim processing system and method.

The system comprises of a remote computer 132 that is locally connected to a digital camera 134 and barcode scanner 180 and is remotely connected via a communication network 106 to a server computer 108. Data is passed between the two computers 132, 108 via the communication network 106 to illustrate the nature of the problem, identify the item on which the problem exists and confirm whether or not a warranty claim is accepted.

## Description

The present invention relates generally to electronic communication and, more particularly, to a method and system for transmitting digital media between remote locations.

The present invention seeks to improve upon existing methods and systems for generating and processing warranty claims in the automotive industry. Conventionally, an automobile owner having a damaged automobile visits his or her automobile dealer or service center demanding repair and warranty coverage. In many cases, however, the service writer assisting the automobile owner does not have the authority to authorize warranty coverage. Accordingly, the service writer faces the often time-consuming task of contacting the warrantor (i.e., the automobile manufacturer), communicating the customer concern, and awaiting a decision as to whether and how the warrantor will cover the cost of repair.

Such manual methods of processing automotive warranty claims are very displeasing to the automobile owner because of the time necessary to contact and discuss the concern with the warrantor. It is not uncommon for the process to take several hours or days. As a result, systems for automating manual warranty claim processing have been developed. Prior art systems have automated the generation and communication of warranty claims, and decisions thereon, using electronic or computer-based communication between a plurality of distributed automobile dealers and a central warranty claim processing center. Prior art systems utilize computer networking and software technology to facilitate and substantially reduce the amount of time associated with generating and processing warranty claims.

Having a computer-based warranty claim processing system benefits the automobile owner, the automobile dealer or service center, as well as the automobile manufacturer or warrantor. The automobile owner enjoys the reduced time required to receive a coverage decision. The automobile dealer or service center enjoys a higher consistency in warranty coverage due to the central decision-making architecture often associated with the networked systems. The manufacturer benefits with a centralized and more up-to-date source of information pertaining to customer complaints. Having such information readily available to the automobile manufacturer reduces the time between problem identification at the dealer level and resolution at the manufacturer level.

Prior art systems for processing automotive warranty claims often utilize computer software and Internet communication technology to transmit images and text associated with an automotive warranty claim to the warrantor at a central claim processing center. The prior art systems, however, have several drawbacks.

First, the prior art systems are principally e-mail based, having software at the sender and recipient computers for automating the generation and presentation of the e-mail in a format that includes both text and graphics. Because these systems are implemented on an e-mail platform, the transmission time is unpredictable, unstable and generally longer than that associated with a dedicated or more private network configuration.

Secondly, the prior art systems require that the user (i.e., service writer) manually transfer images of the customer concern from a digital camera device to the computer hosting the warranty claim processing software. This manual process usually involves taking the picture(s) with a digital camera, physically removing a floppy disk or smart card containing the digital image files from the camera, installing the disk into the service writer's computer, and appending the image files to the warranty claim processing software for transmission to the warranty claim processing center.

A third problem associated with the prior art systems involves the manual entry of the vehicle identification number (VIN) pertaining to the customer concern. VINs are often long and confusing combinations of numbers, letters and punctuation. As a result, service writers commonly make mistakes when manually entering VINs into the warranty claim processing software. Such mistakes inevitably lead to, at least, additional confusion and wasted time at the warranty claim processing center and inaccurate accounting.

It is an object of this invention to provide an improved method and system for generating and processing warranty claims.

According to a first aspect of the invention there is provided a system for transmitting digital media between remote computers via a communication network, the system comprising a first computer configured to receive at least one digital image file from a digital camera device wherein the image file is received automatically upon establishing operable communication between the first computer and the digital camera device, receive a barcode from a barcode scanning device identifying the at least one digital image file wherein the barcode is received automatically upon establishing operable communication between the first computer device and the barcode scanning device and transmit the at least one digital image file and barcode to a second computer via the communication network.

The first computer may be additionally configured to receive a first dialog associated with the at least one digital image file and transmit the first dialog to the second computer.

The second computer may be configured to receive a second dialog in response to the at least one digital image file, barcode and first dialog and transmit the second dialog to the first computer.

The first and second computers may each be programmed to generate a graphical user interface for presenting the at least one image file, the barcode and the dialog.

The system may be additionally configured to archive the transmissions between the first and second computers.

The second computer may be a server computer operably serving a plurality of client computers wherein the server computer is configured to route incoming transmissions to the client computers based on a priority indicator such that incoming media having an active priority indicator are routed to a client computer before incoming media having an inactive priority indicator.

Alternatively, the second computer is a server computer operably serving a plurality of client computers wherein the server computer is configured to route incoming transmissions to the client computers based on a distribution algorithm wherein transmissions that are not viewed at one client computer within a predefined amount of time are rerouted to another client computer.

As yet another alternative, the second computer may be a server computer operably serving a plurality of client computers wherein the server computer is configured to route incoming transmissions among the plurality of client computers based on language of the transmission.

Advantageously, the system is a system for processing an automotive warranty claim and the at least one digital image file from the digital camera device illustrates a customer concern for a vehicle, the captured barcode identifies the vehicle relating to the warranty claim, the first computer is operable to receive and display input containing a request for warranty coverage and transmit the at least one digital image file, barcode and request for warranty coverage to the second computer via a communication network and the second computer is configured to receive and display the at least one digital image file, barcode and request for warranty coverage, receive and display input containing a decision whether to provide warranty coverage and transmit to the first computer the at least one digital image file, barcode and decision.

According to a second aspect of the invention there is provided a method for transmitting digital media between remote computers via a communication network, the method comprising capturing at least one digital image of an item with a digital camera device, capturing a barcode with a barcode scanning device wherein the barcode identifies the item, automatically downloading the or all of the captured digital images and the scanned barcode into the first computer upon establishing operable communication between the first computer and the digital camera device and the barcode scanning device respectively and transmitting the at least one digital image and barcode from the first computer to the second computer via the communication network.

The method may further comprise inputting a first dialog associated with the digital images and barcode into the first computer and transmitting the first dialog to the second computer.

The first and second computers may be each programmed to generate a graphical user interface for presenting the digital images, barcode and dialog.

The method may further comprise inputting a second dialog at the second computer in response to the digital images, barcode and first dialog input at the first computer and transmitting the second dialog to the first computer.

The method may further comprise archiving, in a computer database, the digital images, barcode and dialog transmitted between the first and second computers.

The method may further comprise watermarking the images with the barcode.

The method may be a method for processing an automotive warranty claim comprising capturing at least one digital image of a vehicle related to a customer concern with a digital camera device, scanning a barcode identifying the vehicle with a barcode scanning device, docking the digital camera device and the barcode scanning device into a portable data acquisition unit establishing operable communication between the digital camera device, the barcode scanning device and a first computer within the portable data acquisition unit wherein the first computer is programmed to automatically receive the captured images and barcode, inputting into the first computer dialog requesting warranty coverage for the customer concern, transmitting a claimset comprising the digital images, barcode and request for warranty coverage to a second computer via a communication network, reviewing the claimset at the second computer, wherein a decision is made whether to provide warranty coverage based on the review, updating the claimset to include the decision and transmitting the claimset to the first computer via the communication network.

The invention will now be described by way of example with reference to the accompanying drawing of which:-
Figure 1 illustrates a preferred environment in which a system embodiment of the present invention operates;
Figure 2a is a schematic illustration of a portable data acquisition unit (DAU) having a container for housing a digital camera, a scanner and a DAU computer, in accord with the present invention;
Figure 2b is a block diagram of the scanner and a digital camera interface, in accord with the present invention;
Figure 3 is a front view of the DAU container having a lid and a base, in accord with the present invention;
Figure 4 is a rear view of the DAU container, in accord with the present invention;
Figure 5 is a side view of the DAU container, in accord with the present invention;
Figure 6 is a perspective view of the interior surfaces of the DAU container, in accord with the present invention;
Figure 7 is a top view of the DAU container with the lid in the open position, and further illustrating the DAU computer positioned within the computer recess portion, in accord with the present invention;
Figure 8 is a perspective view of the DAU computer screen portion shown in a closed position, in accord with the present invention;
Figure 9 is a perspective view of the DAU computer screen portion shown in an open position, in accord with the present invention;
Figure 10 is a top view of the digital camera, shown accord with the present invention;
Figure 11 is a front view of the digital camera and the scanner unit, shown in accord with the present invention;
Figure 12 is a bottom view of the scanner unit, shown in accord with the present invention;
Figure 13 is a rear view of the digital camera and the scanner unit, shown in accord with the present invention;
Figure 14 is a right side view of the digital camera and the scanner unit, in accord with the present invention;
Figure 15 is a left side view of the digital camera and the scanner unit, shown in accord with the present invention;
Figure 16 is a perspective view of an alternative DAU container or docking station for the camera/scanner assembly, in accord with the present invention;
Figure 17 is a perspective view of the alternative DAU container or docking station for the camera/scanner assembly with the camera/scanner assembly shown in a docked position, in accord with the present invention;
Figure 18 is a process flow diagram illustrating a use for the system, in accord with the present invention;
Figure 19a is a perspective view of the claim approval request screen which is displayed on the DAU computer, in accord with the present invention;
Figure 19b is a perspective view of the claim approval request screen which is displayed on the reviewer computer, in accord with the present invention;
Figure 20a is a partial block flow diagram illustrating a first portion of a software application for generating and transmitting service writer claim approval requests in accord with the present invention;
Figure 20b is a partial block flow diagram illustrating a second portion of the software application for generating and transmitting service writer claim approval requests in accord with the present invention;
Figure 21a is a block flow diagram illustrating a first portion of a software application for receiving, reviewing, and transmitting reviewed claimsets in accord with the present invention;
Figure 21b is a block flow diagram illustrating a second portion of the software application for receiving, reviewing, and transmitting reviewed claimsets in accord with the present invention; and
Figure 22 is a block flow diagram illustrating the preferred operation of the service writer's software application with regard to claimsets that have previously been reviewed and re-transmitted back to the service writer.

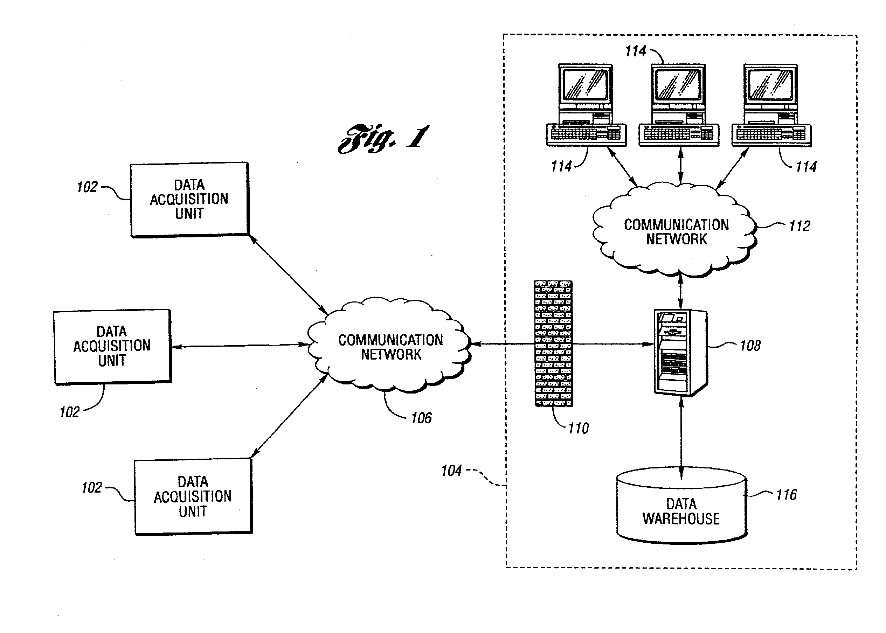

With reference to Figure 1 there is shown a system for transmitting digital media in real time between remote locations in accord with the present invention. The system comprises at least one portable data acquisition unit (DAU) 102 in operable communication with a central media processing center 104. Operable communication between the DAUs 102 and the central media processing center 104 is provided by a communication network 106. Communication network 106 may include but is not limited to a wide area network (WAN) or local area network (LAN), wireless or otherwise, as is well known in the art of computer communication systems. A preferred communication network 106 is Ford Motor Company's "Fordstar" satellite network.

Central processing center 104 comprises at least one server computer 108 configured to send and receive data to and from the DAUs 102 via the communication network 106. Preferably, a security firewall 110 limits the exposure of the central processing center 104 to external attack. Suitable firewalls include but are not limited to packet filter, circuit gateway, application gateway and trusted gateway.

As discussed in more detail below the server computer 108 is configured to serve at least one client computer 114 via a communication network 112.

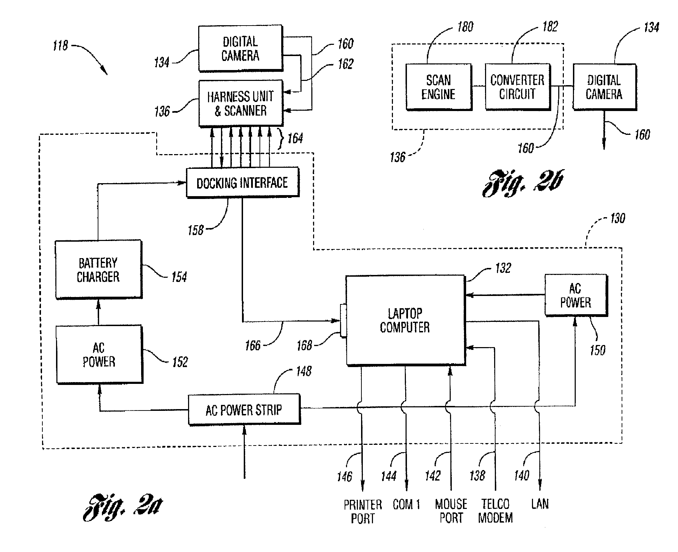

DAU 102 is further illustrated schematically in Figure 2a, in accordance with the present invention. DAU 118 includes a container 130 which houses a computer 132, a digital camera 134 and a scanner 136. Preferably, the DAU computer 132 is a laptop having suitable computing power in a relatively small package size for being easily received into container 130. Additionally, DAU computer 132 includes a modem port 138, a LAN port 140, a mouse port 142, a COM 1 serial port 144, and a printer port 146. Modem port 138 allows computer 132 to connect to a plain old telephone service (POTS) network for transmitting data via the Internet. Alternatively, LAN port 140 allows DAU computer 132 to connect to a network such as an Ethernet network which is in turn connected to a wide area network such as the Internet via a series of fiber optic cables or satellite links. Mouse port 142 allows a computer mouse to be connected to DAU computer 132 overriding the mouse typically packaged with the DAU computer itself. COM 1 serial port 144 enables additional accessories which require communication with DAU computer 132 to be attached thereto. Printer port 146 allows DAU computer 132 to output data to a printer.

Digital camera 134 is, preferably, a Kodak DC 265 available through Kodak Inc. of Rochester, New York. Other digital cameras having the same or similar operational characteristics such as resolution and data output and input ports may also be used. The digital camera 134 and scanner unit 136 will be described in further detail below.

DAU container 130 also includes an alternating current power strip 148 which provides electrical power to computer power supply 150 and to camera power supply 152. Computer power supply 150 is capable of connecting to standard wall outlet power (110-120 volts at 60 Hertz). Further, computer power supply 150 provides suitable operating voltages and electrical current to operate DAU computer 132. Camera power supply 152 provides electrical power to a battery charging circuit 154. As with computer power supply 150, camera power supply 152 is capable of receiving a supply voltage of between 110 to 120 volts at 60 Hertz. Battery charging circuit 154 is in electrical communication with camera power supply 152, and provides electrical charging energy to rechargeable camera batteries (not shown) housed within the scanner unit 136. The battery charging circuit 154 is built by conventional means, as well known in the art, and is available through Cell-Con Company of Coatsville, PA.

More specifically, a docking station 158 having a plurality of electrical terminals 164 communicates battery charging energy to scanner unit 136 which, in turn, communicates the battery charging energy to the camera batteries (not shown) housed therein. The batteries are available through Sanyo Corporation of Japan. Of course, other batteries having similar electrical power output characteristics may be used.

With continuing reference to Figure 2a, digital camera 134 is further illustrated having a data transmission cable 160 and a power cable 162, in accordance with the present invention. Data transmission cable 160 communicates digital image information to scanner unit 136 and then through terminals 164 to docking station 158. The digital image information is then transmitted from docking station 158 through a universal serial bus cable (USB) 166 to a USB port 168 on DAU computer 132.

With reference to Figure 2b, a block diagram of the scanner unit 136 is illustrated, in accord with the present invention. Scanner unit 136 includes a scan engine 180 and a converter circuit 182. The scan engine 180 may be a typical barcode scanner/reader, such as model number SE-1233HP-I101A, available through Symbol Technologies. Scan engine 180 is in communication with converter circuit 182 and upon scanning a barcode outputs a transistor-transistor logic (TTL) signal thereto. Converter circuit 182, built by conventional means, translates the TTL signal into an RS-232 format as is well known in the art. An output signal in RS-232 format is then communicated through data transmission cable 160 to the digital camera 134. Software residing in the camera 134 receives the scanned barcode data and "watermarks" the digital images stored in the camera's memory. Watermarking the images associates the barcode with the digital image taken. In this way the present invention insures that the object or subject matter of the digital image may be identified.

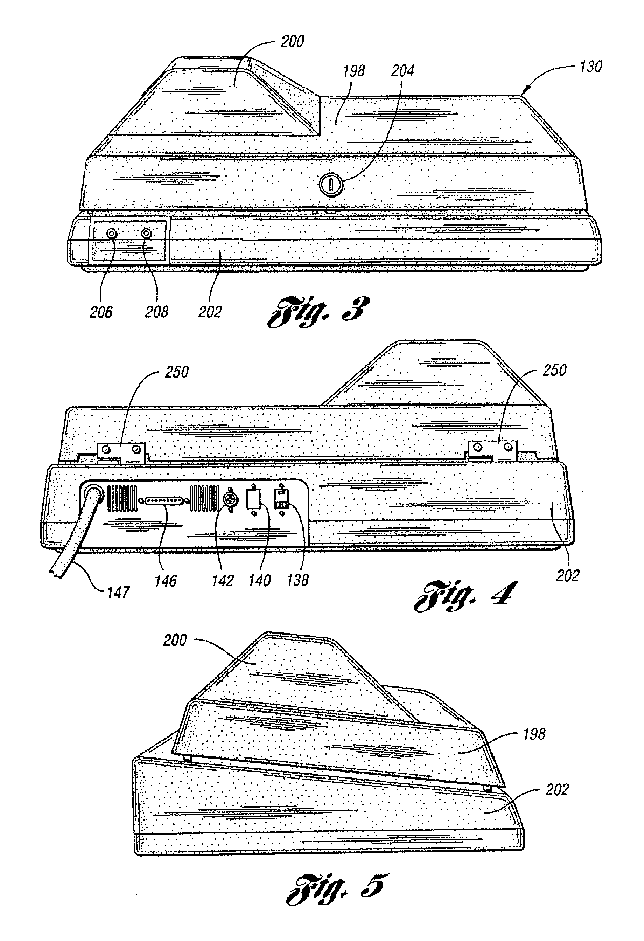

Referring now to Figures 3 through 5, a preferred embodiment of DAU container 130 is illustrated, in accordance with the present invention. Figure 3 is a front perspective view of DAU container 130 having a lid 198 and base 202. Lid 198 includes a raised portion 200 for accommodating the height of digital camera 134. Further, lid 198 includes a lock 204 which releasably secures the lid to the base. Base 202 further includes a power indicator light 206 and a charge indicator light 208. Power indicator light 206 indicates that DAU container 130 is connected to electrical supply power. Charge indicator light 208 indicates that the digital camera 134 is currently charging.

Referring now to Figure 4, a rear view of DAU container 130 is illustrated, in accord with the present invention. A pair of hinges 250 are provided for pivotally securing lid 198 to external base 202. On a rear panel 252 of base 202 there is provided an external modem port 138 , a LAN port 140 , an external mouse port 142 , an external printer port 146 , and an external power cable 147 .

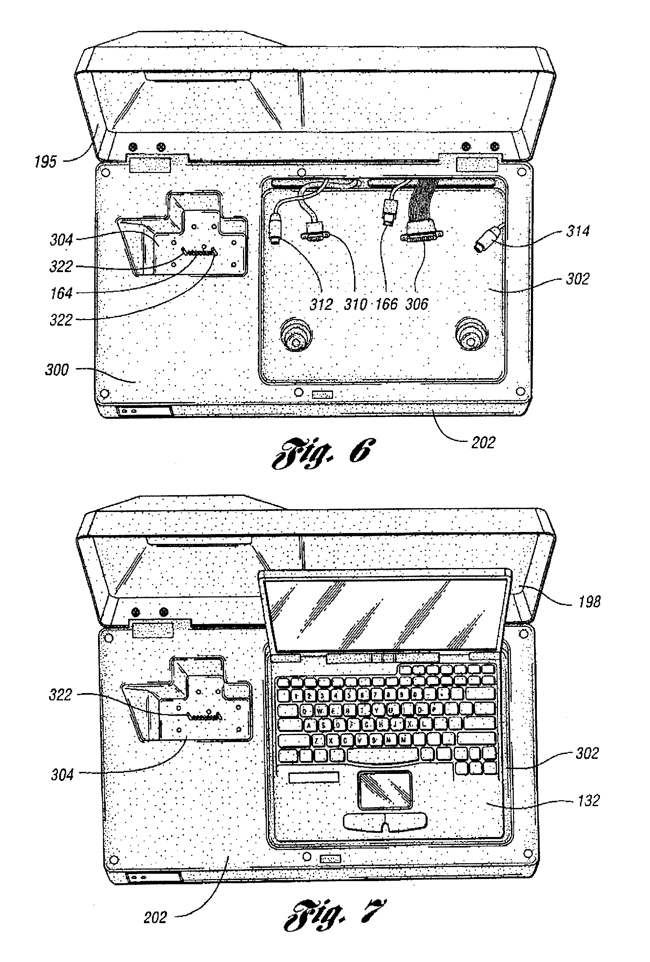

Figure 5 illustrates a side view of container 130, in accord with the present invention. Lid 198 is shown in a closed position with respect to the base 202.

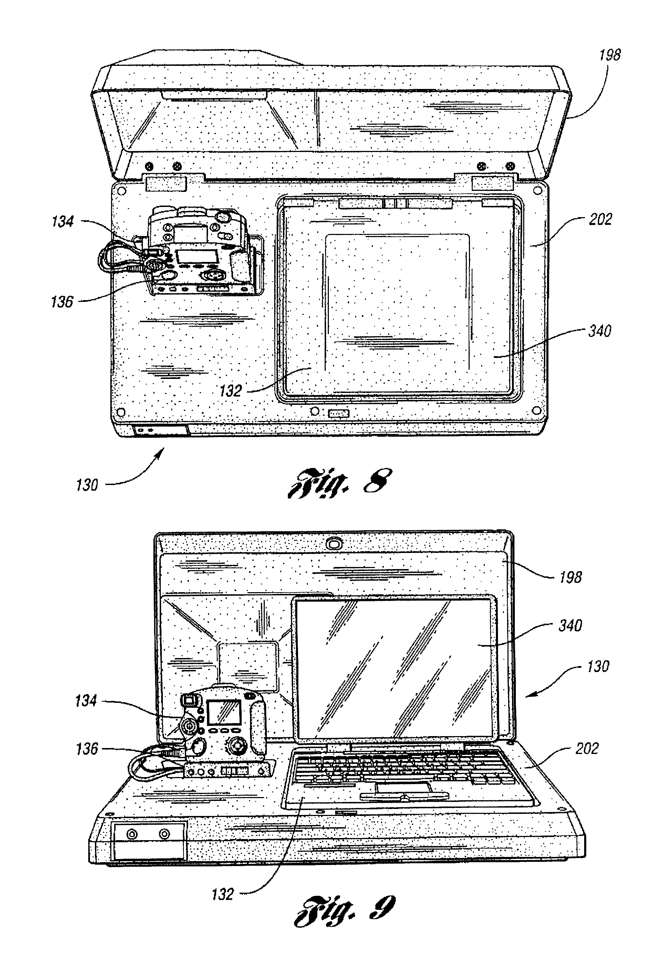

Referring now to Figure 6, the interior surfaces of DAU container 130 are illustrated, in accordance with the present invention. Base 202 has a top surface 300 which includes a computer recessed portion 302 and a digital camera recessed portion 304. Computer recessed portion 302 is generally sized and shaped to receive service computer 132. Computer recessed portion 302 further includes a plurality of apertures for receiving data cables to connect to service computer 132 disposed therein. A parallel printer cable 30 connects printer port 146 to the external printer port 146 on the back panel of base 202. A LAN cable 319 connects the LAN port 140 to the external LAN port 140 on the rear panel of base 202. A COM 1 cable 310 connects the COM 1 port 144 to the external COM 1 port 144 on the rear panel of base 202. A computer mouse cable 312 connects the mouse port 142 on computer 132 to the external mouse port 142 on base 202. USE cable 166 is in communication with USB port 168 on computer 132 at one end, and to four terminals of terminals 164. Terminals 164 contact conductive surfaces disposed on a bottom surface of scanner unit 136, as will be illustrated in subsequent figures.

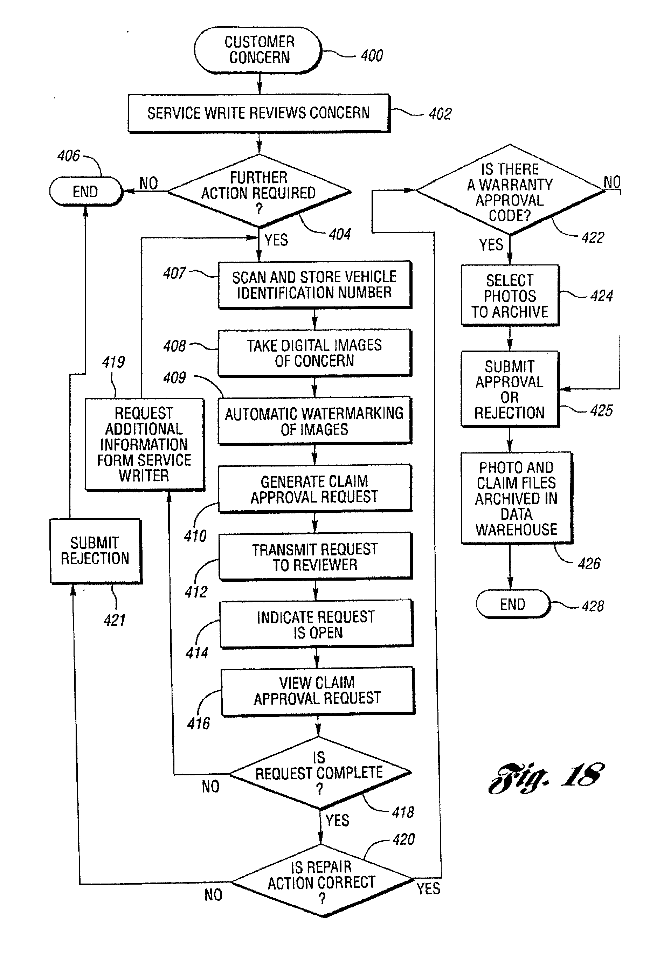

Referring now to Figure 7, a top view of DAU container 130 is illustrated with lid 198 in an open position, and further illustrating service computer 132 positioned within computer recess portion 302. As will be further illustrated hereinafter digital camera recessed portion 304 is sized and has a shape which matches the digital camera 134 and scanner unit 136 assembly allowing the assembly to be seated therein. Digital camera recessed portion 304 further includes a pair of guide pins 322 which are received in a pair of apertures (shown in Figure 12) disposed in the bottom surface of scanner unit 136. Guide pins 322 operate to position the bottom surface and the conductive contacts (shown in Figure 12) disposed thereon onto terminals 164. When digital camera 134 and scanner unit 136 are positioned onto terminals 164 digital image data may be transferred from digital camera 134 to the computer 132. Additionally, when digital camera 134 and scanner unit 136 are positioned within the digital camera recessed portion 304 three terminals of terminals 164 provide charging energy to the rechargeable batteries disposed within scanner unit 136.

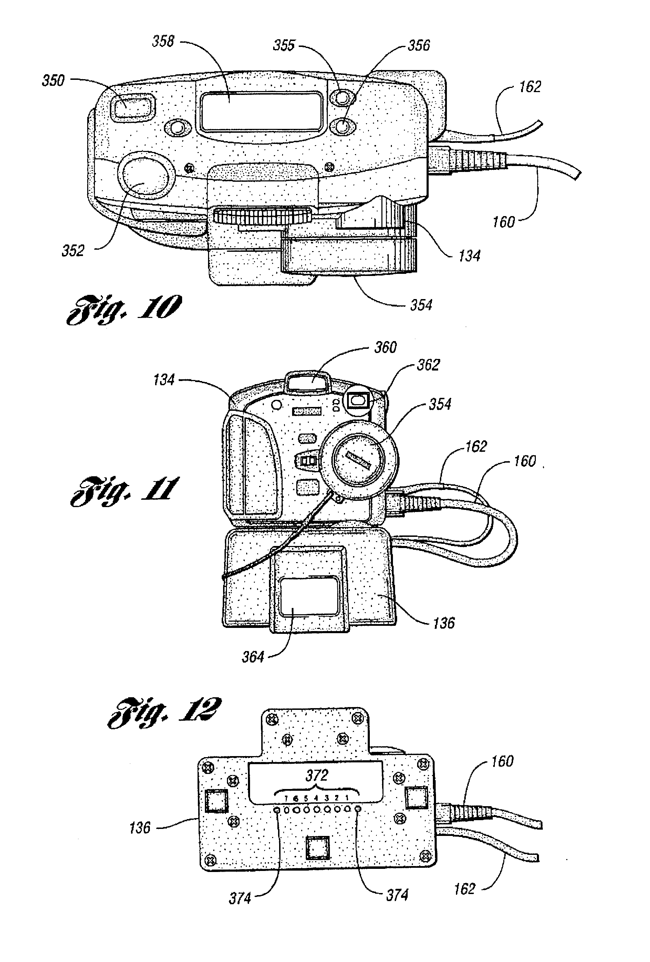

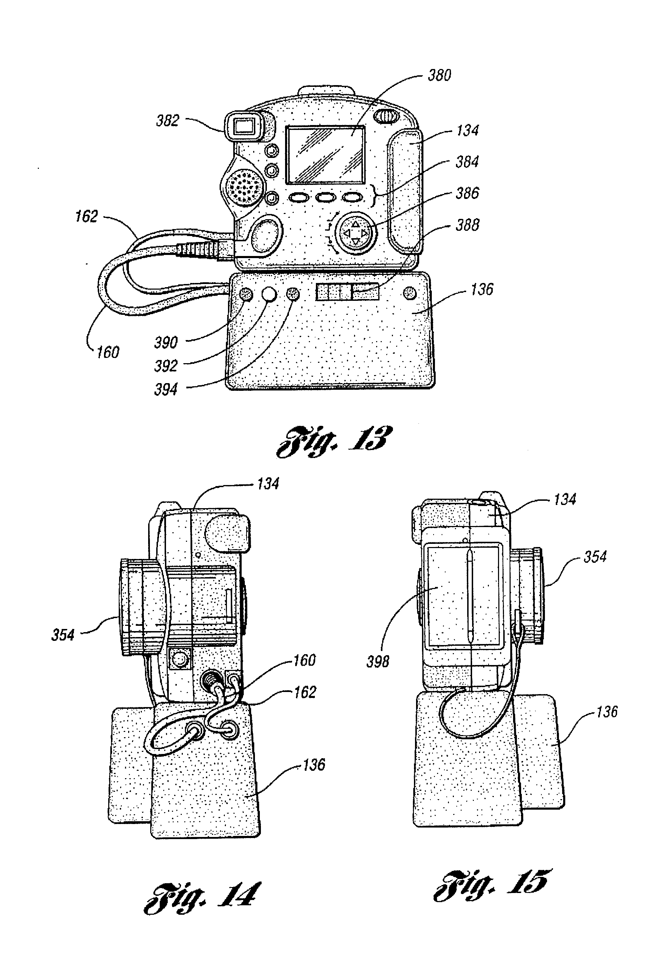

Referring now to Figures 8 and 9, computer 132, digital camera 134 and scanner unit 136 are shown positioned within container 130. As illustrated in Figure 8, computer screen portion 340 is shown in a closed position. In this position, lid 198 may be closed and secured to base 202 using lock 204.

Figure 9 illustrates screen 340 in an open position, in accordance with the present invention. In this position, the computer 132 may be powered on placing the system in a fully operational mode.

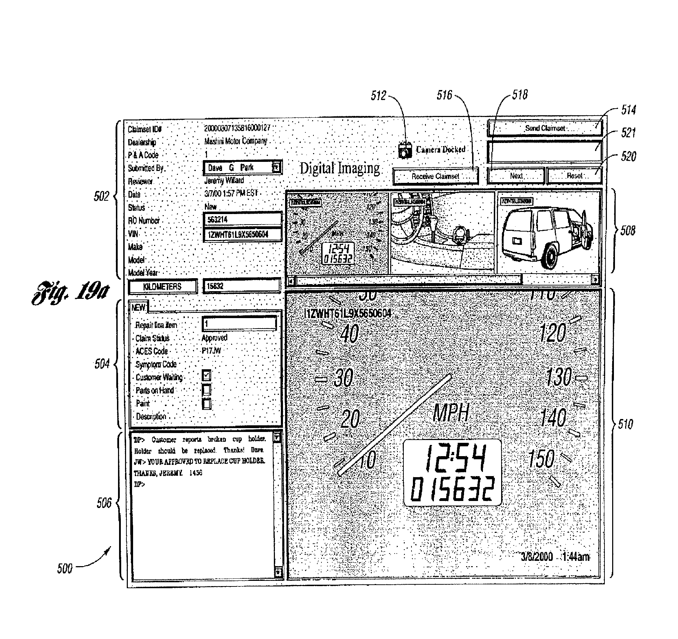

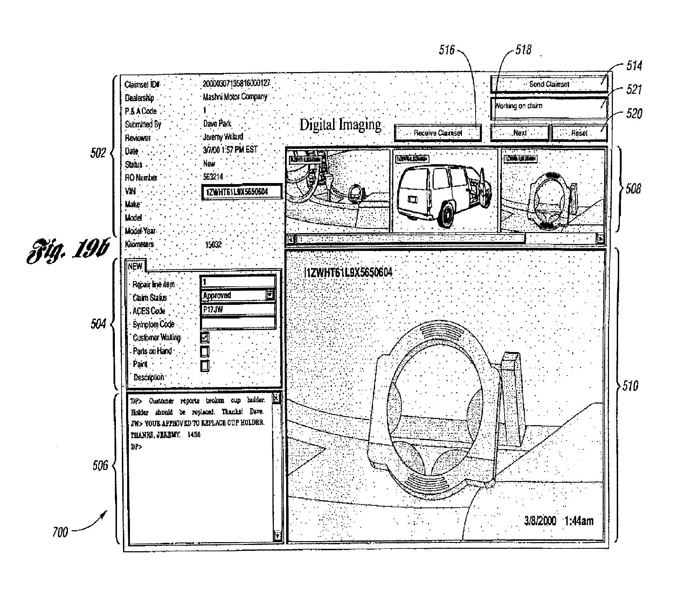

Referring now to Figures 10-15, a more detailed view of digital camera 134 with scanner unit 136 mounted thereto is illustrated, in accord with the present invention. A top view of digital camera 134 is shown in Figure 10. On the top surface of digital camera 134, there is disposed a power button 350 for energizing digital camera 134. Further, an image capture button 352 is also disposed on the top surface of digital camera 134 for acquiring images through camera lens 354. Select button 355 and scroll button 356 are used to actuate and select various camera functions for operating camera 134. The top surface of digital camera 134 further includes a liquid crystal display 358 which communicates camera operation parameters to the camera user.

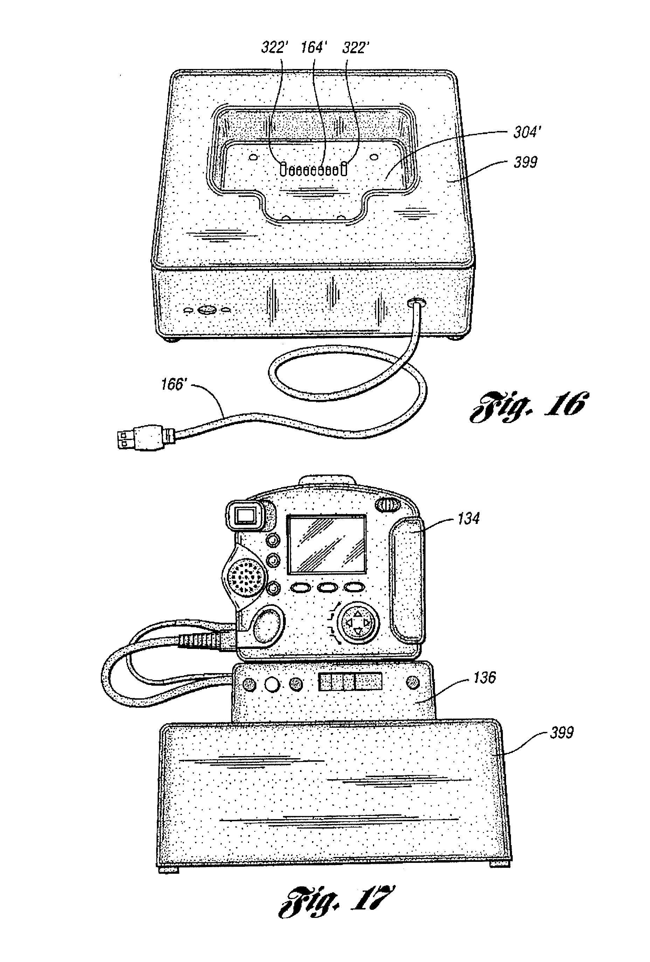

Referring now to Figure 11, a front view of digital camera 134 and scanner unit 136 is illustrated, in accord with the present invention. A front surface of digital camera 134 includes a flash 360 for illuminating the subject matter to be photographed. A view finder lens 362 allows the camera user to position the digital camera to compose the appropriate view of the subject matter to be photographed. Scanner unit 136 includes a scanner engine which is capable of decoding a typical barcode disposed on the subject matter to be photographed for identifying same.

Referring now to Figure 12, a bottom view of the scanner unit 136 is illustrated, in accord with the present invention. A pair of apertures 374 are disposed on the bottom surface of scanner unit 136 for receiving guide pins 322 projecting up from digital camera recess portion 304. Guide pins 322 and associated apertures 374 ensure that digital camera 134 and scanner unit 136 are properly positioned within the digital camera recess portion 304 so that contacts 372 are positioned onto and contact terminals 164.

Referring now to Figures 13-15, the rear and side views of digital camera 134 and scanner unit 136 are illustrated, in accord with the present invention. Referring to Figure 13, a view finder screen 380 is disposed on a rear surface of digital camera 134 for locating and directing the digital camera toward the subject matter to be photographed. Alternatively, a viewing lens 382 may be used to direct the camera. A plurality of user keys 384 are also disposed on the rear surface of camera 134 for selecting various camera functions. A multifunction button 386 further provides selection of camera operating modes.

Digital camera 134 is further provided with an internal microphone 387 for capturing sounds. Of course, an external microphone configured to communicate with camera 134 may also be used. Thus, the present invention allows digital information such as digital image data and digital sound data to be stored and as discussed in more detail infra, automatically transmitted to the computer 168 shown schematically in Figure 2a.

Screw 388 secures the scanner unit 136 to a bottom surface of camera 134. Power indicator 390 is disposed on a rear surface of scanner unit 136 and indicates whether power is being provided to the scanner unit. Charge indicator 392 also disposed on the rear surface indicates whether the camera is being charged. Finally, charge level indicator 394 indicates whether camera 134 is fully charged.

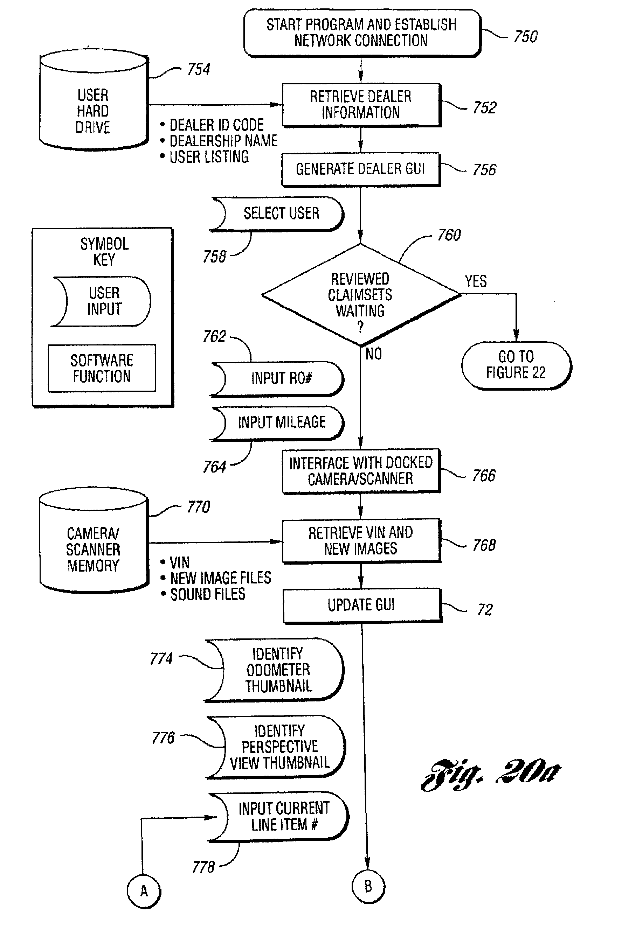

An alternative embodiment for DAU container 130 and docking station 158 is illustrated in Figures 16 and 17, in accordance with the present invention. Stand-alone docking station 399 is configured to hold the camera 134 and scanner unit 136 assembly. As described above with respect to terminals 164, a similar set of terminals 164' are disposed within recess portion 304'. Terminals 164' are in communication with data communication cable 166' which is a universal serial bus (USB) cable. The USB cable communicates data from the camera 134 to the service computer 132. A pair of guide posts 322' are also disposed within recess portion 304' to guide the scanner unit 136 onto terminals 164'. In all other respects the stand-alone docking station 399 functions in a similar manner as container 130 and docking station 158 described above.

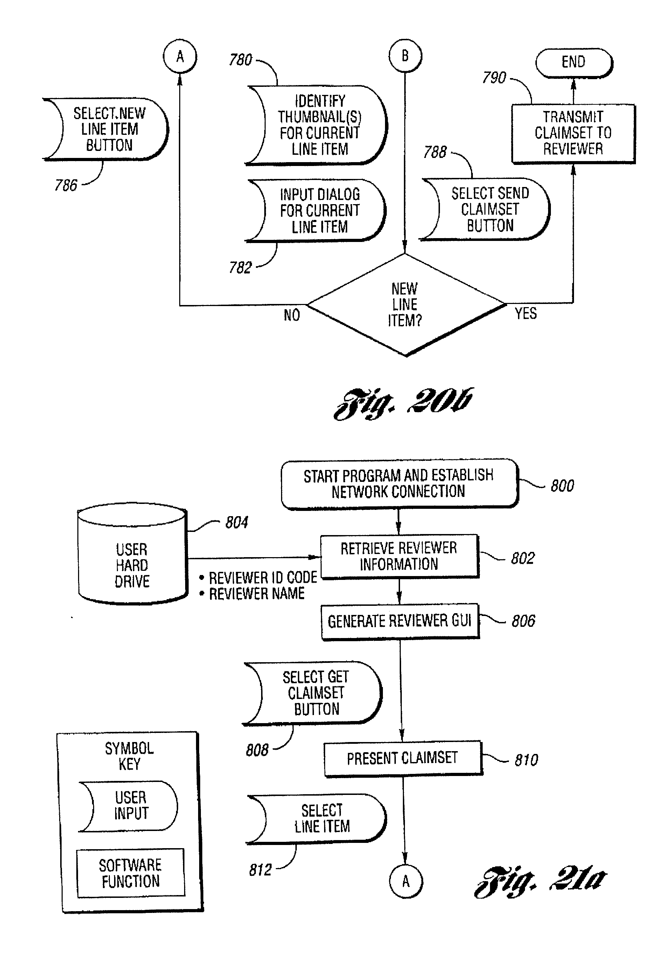

Referring now to Figure 18, a method for using system 100 is illustrated, in accord with the present invention. Although the method described below is directed toward transmitting digital media (i.e., pictures, text, sound, etc.) associated with the processing of an automobile manufacturer warranty claim, it will be appreciated that system 100 can be used to transmit digital media for a plurality of commercial and non-commercial purposes.

With respect to the application of the present invention to warranty claim processing in the automotive industry, the claim processing method is initiated by a vehicle owner entering a vehicle dealership, and describing a concern to a dealership employee or service writer, as represented by block 400. At block 402, the service writer reviews the customer's concern to determine what action is required. If the service writer determines that no further action is required, the process ends, as represented by blocks 404 and 406. However, if the service writer believes further action is warranted, the process moves forward, as represented by block 404.

With continuing reference to Figure 18, after the service writer determines that the customer's concern requires further action, the service writer operates the portable data acquisition unit 102 described in Figure 1. The service writer positively identifies the vehicle by first scanning in the vehicle identification number (VIN) with barcode scanner 136, as represented by block 407. The VIN is stored in the camera's memory. At block 408, digital images are taken of the customer's vehicle with digital camera 134. The images are stored in the camera's memory. Preferably, for identification purposes, at least three digital images of the customer's vehicle are captured. At least one of these images is of the vehicle odometer reading. Another digital image is a rear three-quarter view perspective of the customer's vehicle including the vehicle license plate. Finally, at least one image is taken of the actual vehicle problem which is the subject matter of the warranty claim. At block 409, the camera 134 automatically watermarks the stored images with the VIN to ensure that the images are associated with the proper vehicle.

After the service writer has captured the digital images set forth above, the service writer operates the laptop computer 132 to generate a claim approval request form or "claimset." A detailed description of the claim approval request form and its generation is described in greater detail infra. Once the claim approval request form has been generated, as represented by block 410 the digital images and the request form are transmitted to the central warranty claim processing center (Figure 1, block 104), as represented by block 412. At block 414, a remote claim reviewer at a client computer 114 receives the claim approval request form and opens the request for review as represented by block 416.

Upon opening the claim approval request form for review, the claim reviewer first must determine whether the claim approval request is complete, as represented by block 418. If the claim approval request is not complete or is unclear, the claim reviewer returns the claim approval request to the service writer, and requests the missing information, as represented by block 419. If the claim approval request is complete, the claim reviewer determines whether the repair action suggested by the service writer is correct, as represented by block 420. If the action requested by the service writer is not correct the claim reviewer responds to the service writer by rejecting the requested repair, as represented by block 421. If the claim reviewer believes that the repair action is correct, the claim reviewer determines whether the item is covered under the vehicle warranty, as represented by block 422. If the claim reviewer determines that the repair is covered under the vehicle warranty, a warranty approval code is obtained, as represented by block 422. At block 424, the reviewer selects the digital images which best depict the subject matter of the repair. At block 425, the claim approval request is submitted to obtain the required funds to make the corrective action. However, if the repair is not covered by the vehicle warranty, the repair is rejected and the service writer is notified accordingly, as represented by block 422 and 425. The images and claim file are then stored in a data warehouse 116 where they can be retrieved by participants in the automotive value chain including, but not limited to, design, quality and product engineers, assembly plants, carriers, and suppliers in dispersed locations, as represented by block 426. The process is now complete, as represented by block 428.

In a preferred embodiment of the present invention, system 100 is accessible by an automotive engineering community responsible for designing the company's products.

The system 100, for example, is connected to a data warehouse 116 (shown in Figure 1). Data warehouse 116 is accessed by the automotive engineering community to determine whether a corrective action such as a product redesign is needed. The engineering community views the digital images attached to the claim approval request files and is able to quickly determine what the problem is and generate a fix. The present invention contemplates that other company divisions can be immediately notified of product-related concerns, and a corrective action can be initiated. For example, the company's product factories can be notified and take suitable action to reduce or eliminate customer concerns. The present invention significantly reduces the amount of time to obtain product feedback and thus allows corrective actions to take place much sooner, which ultimately reduces warranty costs and increases customer satisfaction.

Figure 19a illustrates a graphical user interface (GUI) 500 displayed on the DAU computer 132 shown in Figure 1. Notably, certain aspects of the GUI 500 (and the underlying software program) pertain uniquely to the application of the present invention to warranty claim processing in the automotive industry. It is appreciated, however, that GUI 500 (and the underlying software program) may be modified or adapted to best facilitate the transmission of digital media in a plurality of different commercial and non-commercial applications.

With respect to the application of the present invention to warranty claim processing in the automotive industry, the claim approval request GUI 500 includes a claim request information portion 502 which provides information regarding the claim such as: a claimset ID number so that the claim can be tracked, the automobile dealership name where the claim is being originated, a P&A code, the service writer's name, the reviewer's name (if the claim has previously been reviewed), the date and time the claim approval request was created, the status of the request, an RO number (a dealer claim tracking number), the vehicle identification number, and the make, model, and model year of the vehicle. Additionally, a field is provided to enter an odometer reading.

With continuing reference to Figure 19a, the claim approval request GUI 500 is further illustrated having a status portion 504. Status portion 504 includes a repair line field, claim status field, ACES (claim approval) code field, a symptom code field, an indication as to whether the customer or service writer is waiting, whether the necessary repair parts are on hand, and whether paint is required. A description or dialog field is also provided to allow the service writer to manually input details regarding the claim for submission to the claim reviewer.

The claim approval request GUI 500 further includes a dialog portion 506 where the service writer can carry on a dialog in real time with the remote claim reviewer.

The claim approval request GUI 500 also includes a thumbnail image display area 508 for displaying the digital images captured by the service writer. Preferably, all of the pictures are displayed in thumbnail size. An image viewing portion 510 provides a space where the digital images can be enlarged allowing closer scrutiny and annotation of the images.

Other indicators and functions are presented on the claim approval request GUI 500, in accordance with the present invention. For example, the claim approval request screen includes a "Camera Docked" indicator 512 which indicates whether the digital camera is positioned in the digital camera recess portion 304. A series of action buttons are provided for manipulation by the service writer. The action buttons include a "Send Claimset" button 514 for transmitting a completed claim approval request including VIN and digital images to the remote reviewer in real time, a "Received Claimset" indicator 516, a "Next" button 518, and a "Reset" button 520. A "wizard" window 521 is positioned on the upper-right hand side of the claim request approval GUI 500 (and the claim reviewer GUI 700 discussed infra).

Wizard window 521 provides a user of system 100 with step-by-step instructions on how to complete the claim submission (and review) process including error notification. Once one step has been completed, the user selects the "Next" action button 518 causing the wizard window 521 to update with instructions for the next step in the claim submission/approval process. In addition, wizard window 521 provides "out-of-step" or "skipped-step" warnings with associated instructions. A user who is out of step or who has skipped a required step is provided with the option of going back to correct the mistake.

Referring now to Figure 19b, a claim reviewer GUI 700 is shown, in accordance with the present invention. Claim reviewer GUI 700 has a nearly identical appearance as the claim approval request GUI 500. The major difference associated with the claim review GUI 700 is that the claim reviewer has access to certain fields that the service writer does not. For example, only the claim reviewer may make an entry in the claim status field and the ACES claim approval code field.

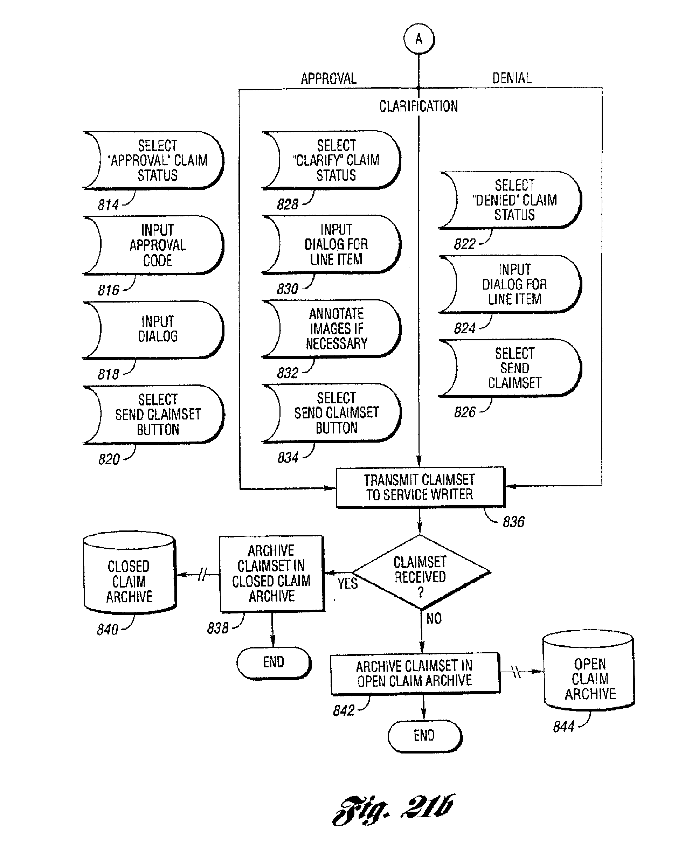

Figures 20a and 20b are collectively a block flow diagram illustrating the preferred operation of the software application programmed to generate and transmit the service writer claim approval requests described supra in Figure 18a (the "service writer software"). Notably, certain aspects of the service writer software herein described (and the reviewer software described infra) pertain uniquely to the application of the present invention to warranty claim processing in the automotive industry. It is appreciated, however, that the service writer software (and reviewer software described infra) may be modified or adapted to best facilitate the transmission of digital media in a plurality of different commercial and non-commercial applications.

As represented by block 750, the service writer establishes communication with server 108 and starts the service writer software illustrated in Figure 18a.

As represented by block 752, the software automatically retrieves a set of predefined dealer information from the hard drive 754 of the computer 132 contained within the data acquisition unit 102. Dealer information includes, but is not limited to, a dealership ID code, the name of the dealership, and a listing of predefined users (i.e., service writers) authorized to request claim approvals via the present invention.

As described in block 756, the software next generates a service writer GUI 601 such as that illustrated and described in Figure 19a. Notably, the service writer GUI automatically contains the previously retrieved dealer ID, dealer name, and list of authorized users.

Next, the software receives user input via the GUI selecting the current user (service writer) from the predefined list of authorized service writers as represented by input 758. As represented by block 760, the software automatically queries the server 108 and data warehouse 116 for any previously submitted claimsets that are awaiting the user's receipt and review. Service writer receipt and review of previously submitted claimsets is discussed in greater detail in Figure 22 infra.

As represented by inputs 762 and 764, the software receives user input containing an RO number (i.e., a dealer claimset tracking number) and a vehicle odometer reading.

As represented by block 766, the software automatically establishes operable communication with the camera/scaner unit (illustrated and described supra) in response to the service writer appropriately docking the camera/scanner unit within the portable data acquisition unit 102. Once communication is established, the software automatically retrieves any media (i.e., pictures, VIN, sounds, etc.) that have been previously captured by the service writer and stored within the camera/scanner memory 770, as represented by block 768.

After the media has been retrieved, the service writer GUI is automatically updated, as represented by block 772, to contain thumbnails of any images, the VIN in the appropriate field, and selections for any sound files.

Next, the software receives user input 774 selecting (and thereby identifying) the odometer thumbnail that is preferably required, user input 776 selecting (and thereby identifying) the perspective view thumbnail that is preferably required, user input 778 defining the current line item number, user input 780 selecting (and thereby identifying) the thumbnail(s) for the current line item and user input 780 creating a real-time dialog with a reviewer at a client computer 114 in the central claim processing center 104.

In the event the software receives user input 786 indicating that a new line item must be added to the current claimset, the software is configured to receive additional inputs 778, 780 and 782.

In the event the software receives user input 788 indicating that the current claimset is complete, the software transmits the claimset to the server 108 at the central warranty claim processing center 104 as represented by block 790.

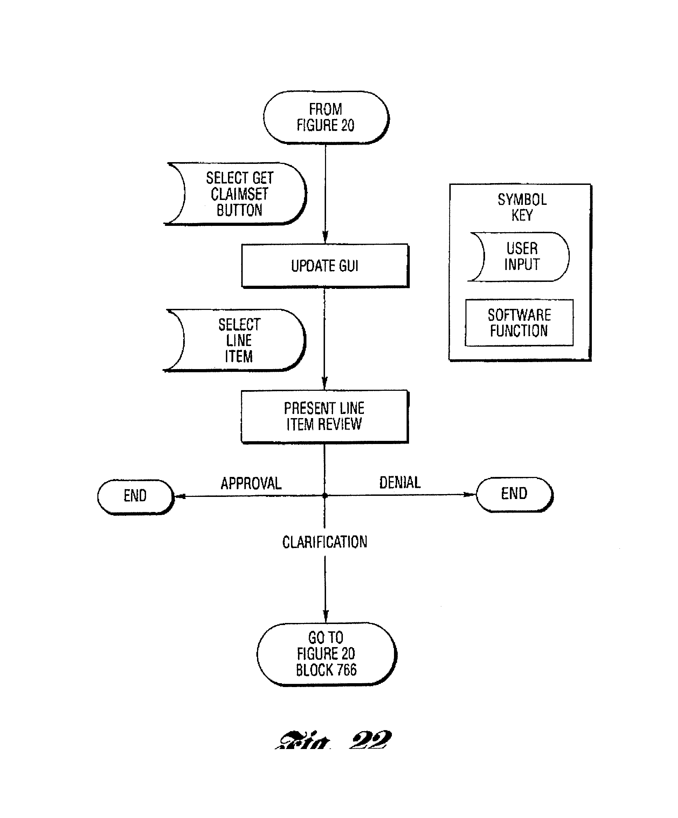

Figures 21a and 21b are collectively a block flow diagram illustrating the preferred operation of the software application programmed to receive and transmit claimsets for review (the "reviewer software") at the central claim processing center 104 in accordance with the present invention.

As represented by block 800, the preferred operation of the reviewer software begins with a reviewer establishing a communication with server 108 and starting the reviewer software.

As represented by block 802, the reviewer software receives user input or automatically retrieves a predefined data set containing reviewer information (i.e., reviewer ID code and name, etc.).

As represented by block 806, the reviewer software next generates a reviewer GUI such as that illustrated and described in Figure 19b.

Assuming that a claimset submitted by a service writer is currently awaiting real-time review, the reviewer software receives user input 808 requesting that the reviewer GUI be updated to contain the pending claimset. In response to the input 808, the software retrieves the pending claimset and updates the reviewer GUI to include the general claim information (i.e., Claimset ID#, Dealership, Submitter, etc.), images, sounds and dialog as represented by block 810.

Once a pending claimset has been opened, the reviewer software receives user input 812 selecting a claimset line item (in the event a claimset contains more than one line item, as discussed supra). For the selected line item, the reviewer software is configured to provide three courses of action: an approval for payment of the warranty claim, a request for clarification of the warranty claim, and a denial of payment for the warranty claim.

To facilitate the approval of a warranty claim line item, the reviewer software is configured to receive user input 814 selecting an "Approval" claim status, input 816 specifying an approval code, input 818 containing reviewer dialog associated with the approval and input 820 requesting that the approved claimset be transmitted in real-time back to the portable data acquisition unit 102 operated by the originating service writer.

To facilitate a reviewer's request for clarification of a warranty claim line item, the reviewer software is configured to receive user input 828 selecting a "Clarify" claim status, input 830 containing reviewer dialog associated with the unclear claimset, input 832 annotating the unclear images if necessary to facilitate clarification, and input 834 requesting that the reviewed claimset be transmitted in real time back to portable data acquisition unit 104 operated by the originating service writer.

To facilitate the denial of a warranty claim line item, the reviewer software is configured to receive user input 822 selecting a "Denied" claim status, receive input 824 containing reviewer dialog associated with the denied claim, and input 826 requesting that the reviewed claimset be transmitted in real time back to the portable data acquisition unit 104 operated by the originating service writer.

In response to input 820, 834 or 826, the reviewer software operably transmits the reviewed claimset back to the portable data acquisition unit 104 operated by the originating service writer, as represented by block 836.

In accord with a preferred embodiment of the present invention, the reviewer software is configured to archive reviewed claimsets that have not been received and opened by their originating service writer within an open claim archive 844 in the data warehouse 116 as represented by block 842. Similarly, the software is configured to archive claimsets that have been received and opened by their originating service writer within a closed claim archive 840 in the data warehouse 116 as represented by block 838.

Preferably, a GUI is provided (not shown) allowing a user to browse the archive of open and unopened claimsets. It is additionally preferred that the GUI provide functionality to arrange archived claimsets based on claimset criteria including but not limited to: service writer/author, reviewer, origination location, date and time lapsed since the claimset was last transmitted.

Figure 22 is a block flow diagram illustrating the preferred operation of the service writer's software application with regard to claimsets that have previously been reviewed and re-transmitted back to the service writer. Continuing from block 760 in Figure 20, the software is configured to receive user input 860 requesting that the GUI be updated to include a previously reviewed but an unopened claimset. In response to the request, the software updates the GUI to present a sending claimset to the service writer, as represented by block 862. If the claimset comprises more than one line item, the software is configured to receive input 864 selecting or specifying a particular line item. Next, the GUI presents the review of the selected line item including the states, approval code (if any), and associated dialog, as represented by block 865. If the status is "Approved" or "Denied", the warranty claim approval process is complete.

If clarification is requested and new images are required, the service writer software follows the operation and function illustrated and described supra beginning with block 766 in Figure 20.

Referring again to Figure 1, where application of the present invention involves a high volume of media transmissions between the data acquisition units 102 and the central media processing center 104, the server 108 is additionally configured to route incoming and outgoing media in a strategic manner. One strategic routing function comprises a priority-based distribution of transmitted media to client computers 114. In accord with the warranty claim processing example, a warranty claim in which the customer (i.e. vehicle owner) is presently awaiting approval or denial will take priority over a previously submitted claim in which no customer is currently waiting.

Another strategic routing function distributes incoming media to client computers 114 based upon algorithms which may be adjusted to suit prevailing conditions. In accord with the warranty claim processing example, any claims previously routed to a client computer 114 that are not opened within one minute (adjustable) are automatically rerouted to another client computer 114.

Another strategic routing function of particular use to the warranty claim processing example maintains service writer-reviewer continuity throughout the entire claim submission/review process. For example, if a reviewer requests clarification for a particular claimset, that request is received by the originating service writer. Similarly, if a service writer submits a clarified claimset, that claimset is received by the original reviewer.

Another strategic routing function discriminates media transmitted from the data acquisition units 102 to client computers 114 based on the spoken language of the media (if any). In accord with the warranty claim processing example, a claim submitted by a French speaking service writer will be routed to a French speaking reviewer.

While the best mode for carrying out the invention has been described in detail, those familiar with the art to which this invention relates will recognize that various alternative designs and embodiments for practicing the invention could be constructed without departing from the scope of the invention.

## Claims

1. A system for transmitting digital media between remote computers (132, 108) via a communication network (106) **characterised in that** the system comprises a first computer (132) configured to receive at least one digital image file from a digital camera device (134) wherein the image file is received automatically upon establishing operable communication between the first computer (132) and the digital camera device (134), receive a barcode from a barcode scanning device (180) identifying the at least one digital image file wherein the barcode is received automatically upon establishing operable communication between the first computer device (132) and the barcode scanning device (180) and transmit the at least one digital image file and barcode to a second computer (108) via the communication network (106).

2. A system as claimed in claim 1 wherein the first computer (132) is additionally configured to receive a first dialog associated with the at least one digital image file and transmit the first dialog to the second computer (108).

3. A system as claimed in claim 2 wherein the second computer (108) is configured to receive a second dialog in response to the at least one digital image file, barcode and first dialog and transmit the second dialog to the first computer (132).

4. A system as claimed in claim 2 or in claim 3 wherein the first and second computers (132 and 108) are each programmed to generate a graphical user interface for presenting the at least one image file, the barcode and the dialog.

5. A system as claimed in claim 4 additionally configured to archive the transmissions between the first and second computers (132 and 108).

6. A system as claimed in any of claims 1 to 5 wherein the second computer is a server computer (108) operably serving a plurality of client computers (114) wherein the server computer (108) is configured to route incoming transmissions to the client computers (114) based on a priority indicator such that incoming media having an active priority indicator are routed to a client computer (114) before incoming media having an inactive priority indicator.

7. A system as claimed in any of claims 1 to 5 wherein the second computer is a server computer (108) operably serving a plurality of client computers (114) wherein the server computer (108) is configured to route incoming transmissions to the client computers based on a distribution algorithm wherein transmissions that are not viewed at one client computer (114) within a predefined amount of time are rerouted to another client computer (114).

8. A system as claimed in any of claims 1 to 5 wherein the second computer is a server computer (108) operably serving a plurality of client computers (114) wherein the server computer (108) is configured to route incoming transmissions among the plurality of client computers (114) based on language of the transmission.

9. A system as claimed in any of claims 1 to 8 wherein the system is a system for processing an automotive warranty claim and the at least one digital image file from the digital camera device (134) illustrates a customer concern for a vehicle, the captured barcode identifies the vehicle relating to the warranty claim, the first computer (132) is operable to receive and display input containing a request for warranty coverage and transmit the at least one digital image file, barcode and request for warranty coverage to the second computer (108) via a communication network (106) and the second computer (108) is configured to receive and display the at least one digital image file, barcode and request for warranty coverage, receive and display input containing a decision whether to provide warranty coverage and transmit to the first computer (132) the at least one digital image file, barcode and decision.

10. A method for transmitting digital media between remote computers (132, 108) via a communication network (106) **characterised in that** the method comprises capturing at least one digital image of an item with a digital camera device (134), capturing a barcode with a barcode scanning device (180) wherein the barcode identifies the item, automatically downloading the or all of the captured digital images and the scanned barcode into the first computer (132) upon establishing operable communication between the first computer (132) and the digital camera device (134) and the barcode scanning device (180) respectively and transmitting the at least one digital image and barcode from the first computer (132) to the second computer (108) via the communication network (106).
